# EUROPEAN PATENT APPLICATION

(11) **EP 2 679 430 A1**
(43) Date of publication of application: **01.01.2014**
(21) Application number: 12173890.0
(22) Date of filing: 27.06.2012
(51) Int. Cl.: B60K 15/077, B60K 15/063, F02M 63/02, F02M 37/00, E02F 9/08

(54) **Fuel tanks for construction machines**

(71) Applicant: CATERPILLAR INC., Peoria IL 61629-6490 (US)
(72) Inventor: Voss, Sven, 93059 Regensburg (DE); Mann, Thomas, 92421 Schwandorf (DE)
(74) Representative: Kramer - Barske - Schmidtchen

(57) **Abstract**

Mixing of warm fuel reflowing from a common rail (13) of a power source (12) and cool fuel may lead to undesired temperatures of the fuel supplied to the common rail (13). The disclosed apparatus and method may prevent mixing of the warm and cool fuel which may lead to desired temperatures of the fuel supplied to the common rail (13). The disclosed fuel tank (100; 200) may comprise a first fuel compartment (110), a second fuel compartment (120) disposed above the first fuel compartment (110), and a fluid passage (116) configured to fluidly connect the first fuel compartment (110) to the second fuel compartment (120).

## Description

### Technical Field

The present disclosure generally refers to fuel tanks for construction machines, and more particularly to fuel tanks comprising a first fuel compartment and a second fuel compartment for preventing mixing of cool fuel with warm fuel.

### Background

Fuel tanks usually serve as apparatuses for storing fuel which may be combusted within cylinders of internal combustion engines. Particularly, internal combustion engines may be used at construction machines for driving the hydraulic system. It is common that construction machines may be hydraulically driven. The mechanical power may be provided by the internal combustion engine running on, for example, liquid fuel such as diesel fuel.

For example, US 4 416 303 A discloses a plastic fuel tank for motor vehicles comprising a fuel tank and a surge tank disposed exteriorly of an interior of the fuel tank. A fuel return line is arranged so as to discharge returned fuel into a connecting duct between the fuel tank and the surge tank. By doing so, the hot fuel returning from the fuel return line may suck and mix with cool fuel from the main fuel tank.

US 4 450 820 A discloses an engine fuel conditioner and monitor where intake fuel supplied to a conditioning tank is mixed therein with engine heated fuel returned from a fuel injector to which mixed fuel from the tank is fed. The mixed fuel in the conditioning tank is degassed by atmospheric venting through a hydrostatic liquid column rising to a level above the conditioning tank.

A hydraulic liquid reservoir including a tank that has a plurality of walls and a baffle structure which divides the tank into three compartments is known from US 4 210 176 A. The baffle structure is designed such that there are high points in each the first and second compartments which are in communication with the inside of the tank above the liquid level in the third compartment for venting any air. The baffle further allows for producing a good mixing of the return oil with the reminder of the oil in the reservoir.

The present disclosure is directed, at least in part, to improving or overcoming one or more aspects of prior systems.

### Summary of the Disclosure

According to an aspect of the present disclosure, a fuel tank configured to be mounted in a construction machine comprising an internal combustion engine may comprise a first fuel compartment defining a first convex volume including a most upper point. The first fuel compartment may be configured to provide fuel having a first fuel temperature to the internal combustion engine. The fuel tank may further comprise a second fuel compartment defining a second convex volume including a most upper point. The second fuel compartment may be disposed above the first fuel compartment and may be configured to receive excessive fuel from the internal combustion engine. The excessive fuel may have a second fuel temperature being higher than the first fuel temperature. The fuel tank may further comprise a fluid passage configured to fluidly connect the most upper point of the first convex volume of the first fuel compartment to the most upper point of the second convex volume of the second fuel compartment.

According to another aspect of the present disclosure, a fuel system configured to be mounted in a construction machine may comprise a fuel tank according to the present disclosure. The disclosed fuel system may further comprise a fuel reservoir configured to provide fuel to the first compartment via a first fuel line. The fuel reservoir may be further configured to receive fuel from the second fuel compartment via a second fuel line.

According to another aspect of the present disclosure, a construction machine may comprise an undercarriage, a superstructure comprising an internal combustion engine, a swivel configured to rotatably mount the superstructure onto the undercarriage, and a fuel system according to the present disclosure. The fuel tank may be arranged at the superstructure, and the fuel reservoir may be arranged at the undercarriage.

According to another aspect of the present disclosure, a method for providing fuel to an internal combustion engine may comprise supplying fuel having a first fuel temperature from a first fuel compartment of a fuel tank to the internal combustion engine. The first fuel compartment may define a first convex volume including a most upper point. The disclosed method may further comprise supplying excessive fuel having a second fuel temperature being higher than the first fuel temperature from the internal combustion engine to a second fuel compartment of the fuel tank. The second fuel compartment may be disposed above the first fuel compartment and may define a second convex volume including a most upper point. The disclosed method may further comprise fluidly connecting the most upper point of the first convex volume of the first fuel compartment to the most upper point of the second convex volume of the second fuel compartment via a fluid passage.

In some embodiments, the fluid passage may be configured to exclusively enable gaseous fluids to pass from the first fuel compartment into the second fuel compartment.

In some embodiments, the first fuel compartment may be further configured to provide fuel to a common rail of the internal combustion engine, and the second fuel compartment may be further configured to receive excessive fuel from the common rail.

In some embodiments, the fuel tank may further comprise a fuel pump configured to pump fuel from the first fuel compartment to the common rail of the internal combustion engine.

In some embodiments, the second convex volume of the second fuel compartment may be smaller than the first convex volume of first fuel compartment.

In some embodiments, the second convex volume may be equal to about 40 % or less of the first convex volume, and equal to about 5 % or more of the first convex volume.

In some embodiments, the first fuel compartment, the second fuel compartment, and the fluid passage may form together a one-piece fuel tank.

In some embodiments, the fuel reservoir may comprise a filler neck for fuelling the fuel system with fuel.

In some embodiments, the fuel system may further comprise a main fuel pump configured to pump fuel from the fuel reservoir into the first fuel compartment of the fuel tank.

In some embodiments, the second fuel line may comprise at least one fuel cooler configured to cool fuel flowing from the second fuel compartment of the fuel tank to the fuel reservoir.

In some embodiments, the main fuel pump may be arranged at the undercarriage of the disclosed construction machine.

In some embodiments, the disclosed construction machine may further comprise a swivel configured to rotatably mount the superstructure onto the undercarriage.

In some embodiments, the disclosed method may further comprise supplying fuel from a fuel reservoir to the first fuel compartment, and supplying fuel from the second fuel compartment to the fuel reservoir.

Other features and aspects of this disclosure will be apparent from the following description and the accompanying drawings.

### Brief Description of the Drawings

Fig. 1 is a diagrammatic cross-sectional view of a fuel tank according to an exemplary disclosed embodiment.
Fig. 2 is a diagrammatic illustration of a construction machine comprising a fuel system according to an exemplary disclosed embodiment.
Fig. 3 is a diagrammatic illustration of a fuel system comprising a fuel tank according to an exemplary disclosed embodiment used at the construction machine of Fig. 2.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of patent protection shall be defined by the appended claims.

The present disclosure may be based in part on the realization that a fuel tank comprising a first fuel compartment defining a first convex volume including a most upper point, a second fuel compartment disposed above the first fuel compartment and comprising a second convex volume including a most upper point, and a fluid passage fluidly connecting the most upper point of the first fuel compartment to the most upper point of the second fuel compartment may prevent mixing of fuel contained within the first fuel compartment with fuel contained within the second fuel compartment.

The fuel within the first fuel compartment may have a first fuel temperature and may be provided to an internal combustion engine. The fuel within the second fuel compartment may have a second fuel temperature being higher than the first fuel temperature and may be received by the second fuel compartment. The fuel within the second fuel compartment may be fuel which was excessively supplied to the internal combustion engine.

As used herein, the fuel within the first fuel compartment may be referred to as "cool fuel", wherein the fuel received by the second fuel compartment may be referred to as "warm fuel".

As also used herein, a "convex volume" may be any three-dimensionally shaped volume being capable of guiding the entire gaseous fluids contained within the convex volume to its most upper point. It should be understood that the convex volume may enable the gaseous fluids to freely rise to a single most upper point without being trapped. For example, a volume having a stepped side wall configuration, even a partially concave portion, or a combination thereof may be also referred to as a "convex volume" as such a design may also enable gaseous fluids to freely rise to the single most upper point of the convex volume without being trapped in other upper points of part volumes.

Furthermore, the term "inclined" should include any configuration which comprises a strictly monotonically increasing shape. This may not limit, for example, an inclined wall to a wall having a planar surface. Rather, an "inclined wall" may also include a wall having a strictly monotonically increasing cross-sectional profile which may support in rising gaseous fluids to the most upper points of the first and second fuel compartments.

The present disclosure may further be based in part on the realization that, when guiding the gaseous fluids of the first and second fuel compartments to the most upper point of the second fuel compartment, only one device for venting the fuel tank may be necessary for releasing the gaseous fluids. In some embodiments, the gaseous fluids risen to the most upper point of the second fuel compartment may be picked up by the warm fuel. Then, the warm fuel together with the gaseous fluids may be supplied to a fuel reservoir 190, where the gaseous fluids may be vented. In such embodiment, no venting device may be necessary.

The present disclosure may further be based in part on the realization that preventing mixing of cool fuel of the first fuel compartment with warm fuel of the second fuel compartment may maintain the fuel within the first fuel compartment at a constant temperature level desired for having an optimized combustion within the internal combustion engine.

Reference will now be made in detail to the drawings. Wherever possible, the same reference numeral will be used throughout the drawings to refer to the same or like parts.

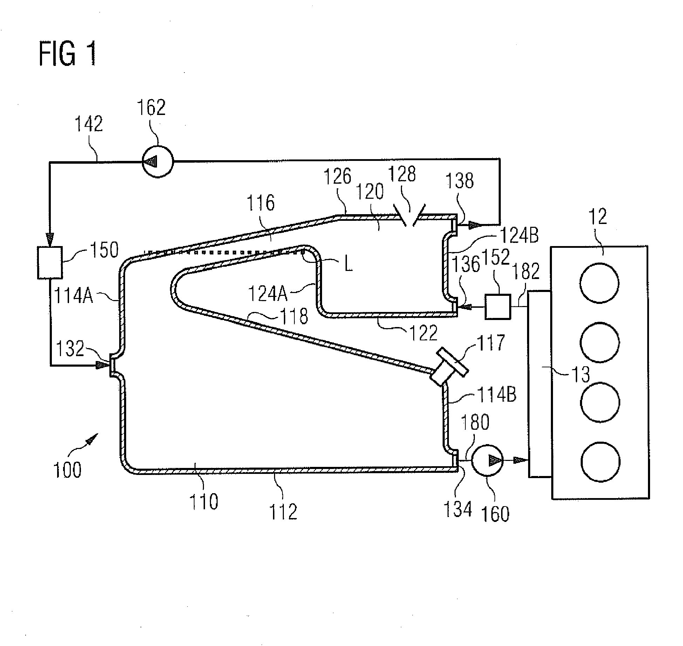

Fig. 1 shows a fuel tank 100 according to an exemplary disclosed embodiment. The fuel tank 100 may comprise a first fuel compartment 110 and a second fuel compartment 120 disposed above the first fuel compartment 110, i.e. the first fuel compartment 110 may be disposed at higher altitudes than the second fuel compartment 120. The first fuel compartment 110 may define a first convex volume including a most upper point. The second fuel compartment 120 may define a second convex volume including a most upper point. The fuel tank 100 may further comprise a fluid passage 116 fluidly connecting the most upper point of first fuel compartment 110 to the most upper point of the second fuel compartment 120. A horizontal dotted line L in Fig. 1 may indicate a separation between the first fuel compartment 110 and the second fuel compartment 120. The fuel tank 100 may further comprise a filler neck 117 arranged at the first fuel compartment 110. The filler neck 117 may be configured to receive fuel from the outside of the fuel tank, thereby fuelling the fuel tank 100 with fuel, for example, diesel fuel.

As further depicted in Fig. 1, the first fuel compartment 110 may include a bottom wall 112, at least two side walls 114A and 114B, and an inclined upper wall 118 opposite to the bottom wall 112. As Fig. 1 is a cross-sectional view of the fuel tank 100, two further side walls being positioned in front and behind the drawing area, respectively, are not shown in Fig. 1.

The inclination of the inclined upper wall 118 may rise towards the fluid passage 116 such that the fluid passage 116 may be fluidly connected to the most upper point of the first fuel compartment 110. For example, according to Fig. 1, the inclined upper wall 118 may smoothly rise from the right side wall 114B to the left side wall 114A. In some embodiments, the inclined upper wall 118 may include any configuration suitable for enabling the entire gaseous fluids to freely rise to the most upper point of the first fuel compartment 110 without being trapped. There, the entire gaseous fluids may be collected and the entire gaseous fluids may enter the fluid passage 116.

The fluid passage 116 may include a cuboid shape. For instance, the fluid passage 116 may also include any other suitable cross-section, such as a circular cross-section, a rectangular cross-section, an oval cross section, etc. However, the fluid passage 16 may be further provided in any suitable inclined shape which may ensure gaseous fluids to completely rise through the entire fluid passage 116 into the second fuel compartment 120.

The second fuel compartment 120 may comprise a substantially rectangular cross-section which may be defined by a bottom wall 122, two side walls 124A and 124B, and an upper side wall 126. As Fig. 1 is a cross-sectional view of the fuel tank 100 and the second fuel compartment 120, two further side walls providing the second fuel compartment 120 in a closed volume may be positioned in front and behind the drawing area, respectively, and are not shown in Fig. 1. The fluid passage 116 may be fluidly connected to the most upper point of the second fuel compartment 120, for instance, the left side wall 124A, as illustrated in Fig. 1.

The inclined upper wall 118 of the first fuel compartment 110 may be configured to guide gaseous fluids contained within the first fuel compartment 110 to the most upper point of the first fuel compartment 110. There, the gaseous fluids may enter the fluid passage 116 which may be also inclined for enabling the gaseous fluids to further rise into the second fuel compartment 120. In some embodiments, the inclination of the fluid passage 116 and the inclined upper wall 118 may be in an angular range of 0° and 50°, preferably in an angular range of 5° to 35°, with respect to a horizontal axis.

The first and second fuel compartments 110 and 120 may be fluidly connected to a power source 12. For example, the power source 12 may include any suitable type of internal combustion engines, such as a dual-fuel, diesel, or hybrid powered engine or turbine.

The first fuel compartment 110 may comprise a fuel outlet 134 being fluidly connected to a common rail 13 of the internal combustion engine 12 via a first fuel supply line 180. A fuel pump 160 may be configured to pump fuel from the first fuel compartment 110 to the common rail 13 via the first supply line 180. The fuel supplied to the common rail 13 by the fuel pump 160 may comprise a first fuel temperature, for example, at maximum 80°C, which may be suitable for being combusted within the internal combustion engine 12 in an optimized manner.

The second fuel compartment 120 may comprise a fuel inlet 136 being fluidly connected to the common rail 13 via a second fuel supply line 182. The second fuel compartment 120 may be configured to receive fuel excessively supplied to the common rail 13. The reflowing fuel may comprise a second fuel temperature, for example 100°C. Due to, for example, the combustion process of the internal combustion engine 12, the second fuel temperature may be higher than the first fuel temperature.

The first fuel compartment 110 may further comprise a fuel inlet 132, and the second fuel compartment 120 may further comprise a fuel outlet 138 being disposed at the most upper point of the second fuel compartment 120. The fuel outlet 138 of the second fuel compartment 120 may be fluidly connected to the fuel inlet 132 of the first fuel compartment 110 via a fuel line 142. A further fuel pump 162 may be configured to pump fuel from the second fuel compartment 120 into the first fuel compartment 110.

The warm fuel pumped from the second fuel compartment 120 into the first fuel compartment 110 may pass a first fuel cooler 150 which may be configured to cool the warm fuel. Hence, after passing the fuel cooler 150, the temperature of the warm fuel may be approximately the same as the temperature of the cool fuel.

The first fuel compartment 110 may define a first convex volume, wherein the second fuel compartment 120 may define a second convex volume which may be substantially smaller than the first convex volume. In some embodiments, the second convex volume may be equal to about 40 % or less of the first convex volume, and equal to about 5 % or more of the first convex volume. Preferably, the second convex volume may be equal to about 30 % or less of the first convex volume, and equal to about 10 % or more of the first convex volume. For example, the first fuel compartment 110 may comprise a first convex volume of about 20 1, whereas the second fuel compartment 120 may comprise a second convex volume of about 3 1.

As also depicted in Fig. 1, a vent valve 128 may be provided on the top of the second fuel compartment 120. The vent valve 128 may be configured to release the gaseous fluids of the second fuel compartment 120 and the gaseous fluids risen from the first fuel compartment 110 into the second fuel compartment 120.

By providing two separated but interconnected fuel compartments 110 and 120, mixing of cool fuel with warm fuel may be prevented within the fuel tank 100. This may ensure that the fuel supplied from the first fuel tank 110 to the common rail 13 may have a desired temperature suitable for being combusted within the internal combustion engine 12. Hence, heating of the fuel within the first fuel compartment 110 may be prevented. Furthermore, only one single vent valve 128 may be needed for venting the first and second fuel compartments 110 and 120.

In some embodiments, a second fuel cooler 152 may be provided between the common rail 13 and the fuel inlet 136 of the second fuel compartment 120 for pre-cooling the warm fuel.

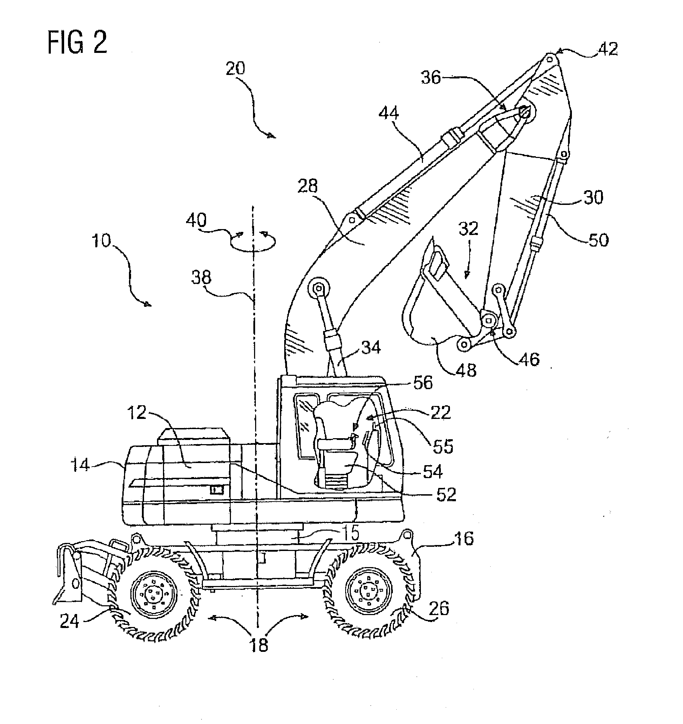

Referring to Fig. 2, a construction machine 10 as, for example, a wheel excavator is shown. The construction machine 10 may include a power source, such as the internal combustion engine 12. The construction machine 10 may further include a superstructure 14 which may be operably attached to an undercarriage 16.

The construction machine 10 may also include a traction system 18, for instance a plurality of wheels, which may be operably attached to the undercarriage 16. In addition, the construction machine 10 may include a work implement 20 and an operator station 22 from which the work implement 20 may be controlled.

The construction machine 10 shown in Fig. 2 as a wheel excavator may be any type of work machine with operator-controlled steering and travelling. For example, the construction machine 10 may include wheel loaders, motor graders, backhoe loaders, skid steers, track-type tractors, tracked excavators, material handlers, cranes, and any other type of work machine with operator-controlled steering and travelling.

The superstructure 14 may be fixedly mounted onto the undercarriage 16. Alternatively, the superstructure 14 may be rotatably mounted onto the undercarriage 16 via a swivel 15. As another alternative, the superstructure 14 may be mounted to the undercarriage 16 in a suitable fashion or any other configuration.

In addition, the construction machine 10 may include a cab-raiser function, by which the superstructure 14 may be raised and lowered relative to the undercarriage 16. Alternatively or additionally, the cab-raiser function may cause the operator station 22 to be raised and lowered relative to the superstructure 14. The cab-raiser function may be hydraulically actuated.

The traction system 18 may include at least one traction device, such as, for example, a first set of wheels 24 and a second set of wheels 26, as shown in Fig. 2. At least one set of wheels may be steerable. The construction machine 10 may be configured with two-wheel or four-wheel steering. Further, a steering configuration may be selectable between two-wheel and four-wheel steering, or the operator may switch which set of wheel is steerable.

While the traction system 18 has been shown to include wheels, the present disclosure may also apply to work machines or vehicles with one or more endless tracks and/or belts, or any other type of traction device. In addition, the present disclosure may apply to steering systems that vary a steering angle of one or more traction devices, as well as skid steer, and differential steering systems. Further, these systems may each apply to work machines with a variety of types of tracks and devices. For example, while track work machines are commonly configured with skid-steer or differential steering systems, they may automatically or additionally be configured with steering systems that vary a steering angle of one or more tracks. Similarly, wheeled work machines or vehicles may steer with a variable steering angle system, skid-steer, and/or differential steering systems.

The work implement 20 may be any type of work implement and may include any type of work tool, such as, for instance, a bucket, blade, grapple, jackhammer, shears, etc.

As shown in Fig. 2, the work implement 20 may include a boom 28, a stick 30, and a work tool 32 attached to the end of the stick 30. The boom 28 may be pivotably attached to the superstructure 14. A boom actuator 34 may be attached to the superstructure 14 and the boom 28, such that a distal end 36 of the boom 28 may be raised and lowered by actuation of the boom actuator 34.

The distal end 36 of the boom 28 may also be moved side-to-side. In the exemplary embodiment shown, the boom 28 may be moved side-to-side by rotation of the superstructure 14 relative to the undercarriage 16 about an axis 38 in a direction indicated by an arrow 40. For purposes of this disclosure, the side-to-side movement of the work implement 20 via rotational movement of the superstructure 14 relative to the undercarriage 16 shall be referred to as "swing". The construction machine 10 may also include an offset boom function by which the boom 28 may be pivoted side-to-side relative to the superstructure 14.

The stick 30 may be pivotally attached to the boom 28 at a proximal end 42. A stick actuator 44 may be attached to the boom 28 and the stick 30 such that actuation of the stick actuator 44 may cause the stick 30 to extend and retract with respect to the boom 28 in a manner of a jackknife. That is, a distal end 46 of the stick 30 may be extended further away from the undercarriage 12, and retract closer to the undercarriage 16 by actuating the stick actuator 44.

The work tool 32 may be attached to the distal end 46 of the stick 30. While the work tool 32 has been illustrated in Fig. 2 as a bucket 48, the work tool 32 may be any type of work tool. The work tool 32 may be pivotably attached to the distal end 46 of the stick 30. A work tool pivot actuator 50 may be attached to the stick 30 and the work tool 32 such that actuation of the work tool pivot actuator 50 may cause the work tool 32 to pivot relative to the stick 30.

The operator station 22 may be a cab as illustrated in Fig. 2, and may be attached to or integral with the superstructure 14. The operator station 22 may include an operator seat 52, a first steering device, such as, for example, a steering wheel 54, a display 55, and at least one-hand operated work implement control device 56, for instance, a joystick. The steering wheel 54 may be operatively coupled to a first set of wheels 24 and/or a second set of wheels 26 so as to control their directional movement. The steering wheel may tilt and/or telescope relative to the operator seat 52 in order to facilitate ingress and egress, or to provide a more opened cab while operating other control devices. For example, steering wheel 54 may be tilted and/or telescoped out of the way while a secondary steering control system is active. The construction machine 10 may include two work implement control devices, one on each side of the operator seat 52.

The work implement control device 56 may control multiple functions of the construction machine 10, as, for example, operation of the work implement 20 (including movements of the boom 28, the stick 30 and the work tool 32), swing, propulsion of the construction machine 10, steering, the cab-raiser function, the offset boom function, etc.

The boom actuator 34, the stick actuator 44, and the work tool pivot actuator 50 may be any kind of actuators, such as, for instance, hydraulic cylinders as shown in Fig. 2. Each hydraulic cylinder may be associated with its own hydraulic circuit in order to be independently controlled. Some work tools, such as the bucket 48, may have a single actuator, and thus may be controlled by a single hydraulic circuit. Other type of work tools, such as grapple may include more than one actuator, and thus may be controlled by more than one hydraulic circuit. For example, grapple may be controlled by two or more hydraulic circuits. One circuit may control the work tool pivot actuator 50, which may pivot the grapple in the same manner as it does the bucket 48. Additionally, a second circuit may control an auxiliary function, such as rotation of the grapple.

One or more of the boom actuator 34, the stick actuator 44, the work tool pivot actuator 50 and all the others, like hydraulic cylinders, may be driven by one or more hydraulic circuits.

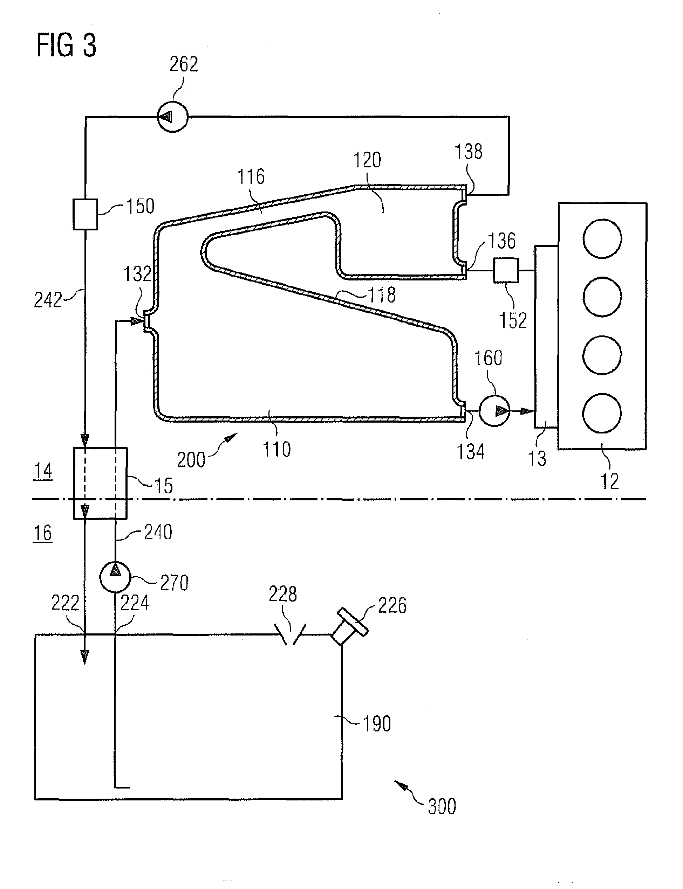

The construction machine may be provided with a fuel system 300 according to the present disclosure. Referring to Fig. 3, a schematic view of the fuel system 300 is shown. The fuel system 300 may comprise a fuel tank 200 according to Fig. 1 of the present disclosure, and a fuel reservoir 190.

The scale of Fig. 3 may not represent real measures of the sizes of, for example, the fuel tank 200, and the fuel reservoir 190. Rather, it should be understood that the fuel reservoir 190 may comprise a third convex volume being much higher than the volume of the fuel tank 200. For example, the fuel volume of the fuel tank 200 including the first and second fuel compartments 110 and 120 may be equal to about 20 % or less of the third convex volume of the fuel reservoir 190. For example, the fuel tank 200 may comprise a fuel volume of about 15 to 25 1, whereas the third convex volume of the fuel reservoir 190 may be about 250 1 to 300 1.

The fuel tank 200 may be arranged at the superstructure 14 and may be in fluid communication with the internal combustion engine 12 also disposed at the superstructure 14. The superstructure 14 may be rotatably mounted to the undercarriage 16 via a swivel 15. The dash-dot line of Fig. 3 may indicate a partition between the superstructure 14 and the undercarriage 16.

The fuel reservoir 190 may comprise a fuel inlet 222 and a fuel outlet 224. The fuel outlet 224 of the fuel reservoir 190 may be fluidly connected to the first fuel compartment 110 via a first fuel line 240 passing through the swivel 15. A main fuel pump 270 may be configured to supply fuel from the fuel reservoir 190 to the first fuel compartment 110. As shown in Fig. 3, the main fuel pump 270 may be disposed at the undercarriage 16 of the construction machine 10. In some embodiments, however, the main fuel pump 270 may be also arranged at the superstructure 14 of the construction machine 10.

For ensuring that the fuel within the fuel tank 200 may not reflow into the main reservoir during, for example, a standstill of the construction machine 10, the main fuel pump 270 may include a check valve.

The fluid inlet 222 of the fuel reservoir 190 may be fluidly connected to the second fuel compartment 120 via a second fuel line 242 also passing through the swivel 15. The fuel pump 262 may be configured to pump fuel from the second fuel compartment 120 into the fuel reservoir.

The fuel reservoir 190 may further comprise a filler neck 226 for refueling the third fuel tank 190 with fuel, and a vent valve 228 for venting the third fuel tank 190.

As already explained in detail with respect to Fig. 1, gaseous fluids within the first fuel compartment 110 may rise, due to the inclined upper wall 118, to the most upper point of the first fuel compartment 110, where the gaseous fluids may enter the fluid passage 116. Subsequently, due to an inclination of the fluid passage 116, the gaseous fluids may further rise into the second fuel compartment 120.

As already described above, the warm fuel received by the second fuel compartment 120 may be continuously supplied to the fuel reservoir 190. As the gaseous fluids may further rise to the most upper point of the second fuel compartment 120, the excessive warm fuel from the common rail 13 may pick up the gaseous fluids such that the gaseous fluids may also be pumped into the fuel reservoir, where the gaseous fluids may be vented via the vent valve 228. Hence, the process of pumping warm fuel together with gaseous fluids from the second fuel compartment 120 of the fuel tank 200 into the fuel reservoir 190 may "vent" the fuel tank 200.

The fuel outlet 138 of the second fuel compartment 120 may be fluidly connected to the fuel inlet 222 of the fuel reservoir 190 via a second fuel line 242. The second fuel line 242 may also pass through the swivel 15 and may comprise the main fuel cooler 150 configured to cool the warm fuel flowing from the second fuel compartment 120 into the fuel reservoir 190.

The fuel tank 100 and the fuel reservoir 190 may be comprised of a moldable material, such as plastics. For example, the fuel tank 100 and the fuel reservoir 190 may be comprised of polyethylene.

### Industrial Applicability

In the following, operation of the fuel system 300 in connection with the construction machine 10, such as a wheel excavator, may be described with reference to Fig. 3.

During operation of the construction machine 10, the fuel pump 160 may supply cool fuel from the first fuel compartment 110 to the fuel rail 13, which may in turn supply fuel to the internal combustion engine 12, where the fuel may be combusted.

For refueling the first fuel compartment 110, the main fuel pump 270 may simultaneously and continuously supply fuel from the fuel reservoir 190 to the first fuel compartment 110 via the first fuel line 240.

The fuel amount supplied by the main fuel pump 270 may be substantially higher than the fuel amount provided from the second fuel tank 100 to the internal combustion engine 10. Thus, the fuel tank 200 may be continuously filled with fuel and may not get empty.

Excessively supplied fuel to the fuel rail 13 may flow into the second fuel compartment 120. Due to the combustion environment within the internal combustion engine 10, the fuel within the common rail 13 may be heated. Thus, the fuel received by the second fuel compartment 120 may have a temperature being higher than the cool fuel temperature.

By having the second fuel compartment 110 separately arranged above the first fuel compartment 110, mixing of the cool fuel and the warm fuel flowing from the fuel rail 13 into the second fuel compartment 120 may be prevented. In some embodiments, a second fuel cooler 152 provided between the common rail 13 and the fuel inlet 136 of the second fuel compartment 120. The fuel cooler 152 may be configured to pre-cool the warm fuel before entering the second fuel compartment 120.

The fuel supplied by the main fuel pump 270 to the first fuel compartment 110 may contain gaseous fluids. Due to the inclined upper wall 118 of the first fuel compartment 110, the gaseous fluids may rise to the most upper point of the first fuel compartment 110, to which the inclined fluid passage 116 may be fluidly connected. After rising to the most upper point of the first fuel compartment 110, the gaseous fluids may further rise through the fluid passage 116 into the second fuel compartment 120.

The warm fuel flowing from the common rail 13 into the second fuel compartment 120 may be configured to be further pumped back into the fuel reservoir 190 via the second fuel line 242. The reflowing warm fuel may mix with and pick up the gaseous fluids risen from the first fuel compartment 110 and may both together flow back into the fuel reservoir 190. There, the gaseous fluids may be vented via the vent valve 228. While flowing through the second fuel line 242, the fuel may be cooled by the first fuel cooler 150.

In some embodiments, the gaseous fluids may be directly vented at the second fuel compartment 120 via the vent valve 122 shown in Fig. 1. The fuel within the fuel reservoir 190 may cool down and may be newly supplied to the first compartment 110 as described above.

By using a fuel system 300 as described above, it may be ensured that the fuel supplied from the first fuel compartment 110 to the internal combustion engine 12 may comprise a desired temperature suitable for having an optimized combustion.

Regarding Fig. 3, the fuel tank 200 may serve as a kind of fuel accumulator. For example, in the case of a malfunction of the main fuel pump 270, the construction machine 10 may be able to, for instance, leave the work site for having maintenance of the main fuel pump 270. Additionally, as the fuel reservoir 190 comprising the majority fuel volume may be arranged at the undercarriage 16, fuelling of the fuel system 300 may be facilitated, as an operator may stand on the ground and may fuel the fuel system 200 via the filler neck 226 of the fuel reservoir 190.

The fuel tank 200 may further compensate fuel feeding unsteadiness during operation of the internal combustion engine 12 and may provide fuel for the engine start. Furthermore, in case of a malfunction of the fuel supply from the fuel reservoir 190 to the fuel tank 200, the fuel tank 200 may provide fuel to the internal combustion engine 12, such that the construction machine 10 may be able leave the worksite to have maintenance.

Although the preferred embodiments of this invention have been described herein, improvements and modifications may be incorporated without departing from the scope of the following claims.

## Claims

1. A fuel tank (100; 200) configured to be mounted in a construction machine (10) comprising an internal combustion engine (12), the fuel tank (100; 200) comprising:
a first fuel compartment (110) defining a first convex volume including a most upper point, and being configured to provide fuel having a first fuel temperature to the internal combustion engine (12);
a second fuel compartment (120) defining a second convex volume including a most upper point, the second fuel compartment (120) being disposed above the first fuel compartment (110) and being configured to receive excessive fuel from the internal combustion engine (12), the excessive fuel having a second fuel temperature being higher than the first fuel temperature; and
a fluid passage (116) configured to fluidly connect the most upper point of the first convex volume of the first fuel compartment (110) to the most upper point of the second convex volume of the second fuel compartment (120).

2. The fuel tank (100; 200) according to claim 1, wherein the fluid passage (116) is configured to exclusively enable gaseous fluids to pass from the first fuel compartment (110) into the second fuel compartment (120).

3. The fuel tank (100; 200) according to any one of the preceding claims, wherein the first fuel compartment (110) is further configured to connect to a common rail (13) of the internal combustion engine (12), and the second fuel compartment (120) is further configured to receive excessive fuel from the common rail (13).

4. The fuel tank (100; 200) according to claim 3, further comprising a fuel pump (160) configured to pump fuel from the first fuel compartment (110) to the common rail (13).

5. The fuel tank (100; 200) according to any one of the preceding claims, wherein the second convex volume of the second fuel compartment (120) is smaller than the first convex volume of first fuel compartment (110).

6. The fuel tank (100; 200) according to claim 5, wherein the second convex volume is equal to about 40 % or less of the first convex volume, and equal to about 5 % or more of the first convex volume.

7. The fuel tank (100; 200) according to any one of the preceding claims, wherein the first fuel compartment (110), the second fuel compartment (120), and the fluid passage (116), forming a one-piece fuel tank.

8. A fuel system (300) configured to be mounted in a construction machine (10) comprising an internal combustion engine (12), the fuel system (300) comprising:
a fuel tank (100; 200) according to any one of the preceding claims; and
a fuel reservoir (190) configured to provide fuel to the first fuel compartment (110) of the fuel tank (100; 200) via a first fuel line (240), and to receive fuel from the second fuel compartment (120) of the fuel tank (100; 200) via a second fuel line (242).

9. The fuel system (300) according to claim 8, wherein the fuel reservoir (190) comprises a filler neck (226) for fuelling the fuel system (300) with fuel.

10. The fuel system (300) according to any one of claims 8 or 9, further comprising a main fuel pump (270) configured to pump fuel from the fuel reservoir (190) into the first fuel compartment (110) of the fuel tank (100; 200).

11. The fuel system (300) according to any one of claims 8 to 10, wherein the second fuel line (242) comprises at least one fuel cooler (150) configured to cool fuel flowing from the second fuel compartment (120) of the fuel tank (100; 200) to the fuel reservoir (190).

12. A construction machine (10) comprising:
an undercarriage (16);
a superstructure (14) comprising an internal combustion engine (12);
a swivel (15) configured to rotatably mount the superstructure (14) onto the undercarriage (16); and
a fuel system (300) according to any one of claims 8 to 11,
wherein the fuel tank (100; 200) is arranged at the superstructure (14), and the fuel reservoir (190) is arranged at the undercarriage (16).

13. The construction machine (10) according to claim 12, wherein the main fuel pump (270) is arranged at the undercarriage (16).

14. A method for providing fuel to an internal combustion engine (12), comprising:
supplying fuel having a first fuel temperature from a first fuel compartment (110) of a fuel tank (100; 200) to the internal combustion engine (12), the first fuel compartment (110) defining a first convex volume including a most upper point;
supplying excessive fuel having a second fuel temperature being higher than the first fuel temperature from the internal combustion engine (12) to a second fuel compartment (120) of the fuel tank (100; 200), the second fuel compartment (120) being disposed above the first fuel compartment (110) and defining a second convex volume including a most upper point; and
fluidly connecting the most upper point of the first convex volume of the first fuel compartment (110) of the fuel tank (100; 200) to the most upper point of the second convex volume of the second fuel compartment (120) of the fuel tank (100; 200) via a fluid passage (116).

15. The method according to claim 14, further comprising:
supplying fuel from a fuel reservoir (190) to the first fuel compartment (110) of the fuel tank (100; 200); and
supplying fuel from the second fuel compartment (120) of the fuel tank (100; 200) to the fuel reservoir (190), thereby picking up gaseous fluids risen from the first fuel compartment (110) of the fuel tank (100; 200) into the second fuel compartment (120) of the fuel tank (100; 200).
